# EUROPEAN PATENT SPECIFICATION

(11) **EP 1 203 689 B1**
(45) Date of publication and mention of the grant of the patent: **01.12.2004**
(21) Application number: 00935222.0
(22) Date of filing: 30.05.2000
(51) Int. Cl.: B60N 2/36, B60N 2/22, E05B 65/32

(54) **MULTIPLE-POSITION LOCK FOR VEHICLE BACKSEATS**
MEHRFACHSTELLUNGSVERSCHLUSS FÜR FAHRZEUGRUCKENLEHNEN
VERROU POUR BANQUETTE ARRIERE D'AUTOMOBILE A POSITIONS MULTIPLES

(43) Date of publication of application: 08.05.2002
(73) Proprietor: Grupo Antolin-Ingenieria, S.A., 09007 Burgos (ES)
(72) Inventor: VERMEULEN, Mauricio, E-09003 Burgos (ES)
(74) Representative: Urteaga Simarro, José Antonio
(86) International application number: PCT/ES2000/000191
(87) International publication number: WO 2001/092053

(56) References cited:
- EP-A- 0 839 685
- DE-A- 19 639 051
- DE-U- 29 502 987
- US-A- 3 262 725
- US-A- 5 662 377

## Description

This invention refers to a lock that allows to anchor a car rear seat to the car bodywork in different positions, so that the rear seat's back can be regulated according to the user's wishes.

An example of such a lock is that of EP-A-0760308 (corresponding to the preamble of claim 1), in which an arm locked to the car bodywork engages inside the mechanism that is housed at the rear of the seat, halfway up the back of the seat. The arm may change its position with respect to the mechanism.

In practice this mechanism has a number of drawbacks:
- Since the anchoring point is halfway up the back of the seat, this means that there is a momentum around the seat back in the event of a collision in which the load from the car boot is thrust against the back of the seat, and therefore the seat must be reinforced in view of the torque created on the anchoring point.
- The activating device for the mechanism is located at the upper part of the seat, i.e. at some distance from the mechanism, thus increasing the complexity and cost of system assembly.
- The arm connected to the car bodywork which locks on to the mechanism could be dangerous in the event of a crash, since it could touch the passenger's body .
- There is a limit to the length of the anchoring arm imposed by the various stresses which must be borne by the system, and there is also a limit to the number of lock-in points.

The present invention proposes a rear seat lock that meets the following objectives:
- It should overcome the inconveniences of the aforementioned existing technique.
- It should be located on the upper part of the seat back, thus reducing the torque generated by loads on the seat back.
- It should integrate the engagement device with the lock mechanism.
- Any kind of opening device must be able to be used.
- There should be no limitation as to the number of seat positions.
- It should be simple to assemble, using a relatively low-cost mechanism.

To meet these objectives, the invention features a mechanism that is located on the upper part of the back of the rear seat, and that is integrated with the opening system. The opening system is activated by an opening controller, which can be a bar, a lever, a button or a pull bar.

The mechanism consists of a linked latch and trigger mounted on a base plate. The mechanism is activated inside a casing, which covers all components to prevent any contact with other external features or with the vehicle passengers.

The latch and the trigger both rotate on rivets (7, 4) secured to the base plate. The rivets (7, 4) include springs to limit the movement of the parts.

The latch and trigger are interconnected by a guide rod. More precisely, the connection on the trigger's side is established between the rod and a circular cut-out on the trigger.

The latch is activated by the release device, which can be connected to a lever, if this were the means to be used to activate the device, or to a short rod connecting the latch and a lever, button or pull device, for example.

The rivet on which the latch rotates is connected to a latch-spring which allows the latch to move radially to the position of closure. The latch-spring is fastened to the latch itself and to the base plate.

The latch is in charge of freeing the trigger, i.e. allowing it to move and carry out its function. Both the latch and the trigger are provided with pairs of surfaces along their sides that correspond to the open-trigger and closed-trigger positions. There is no surface contact in the open-trigger situation, when the trigger is in the position of allowing the movement to another lock-in point.

The trigger has a U-shaped recess designed to house each projection in the car bodywork associated to each seat control position. The rivet that connects the trigger to the base plate is connected to a trigger-spring which allows the trigger to rotate towards the open-trigger position. This spring is fastened to the aforementioned rivet and to a rubber stop present on another rivet on the base plate.

This rubber stop also cushions vibrations and allows the lock to anchor itself. Besides, it restricts the anticlockwise circular movement of the trigger by inhibiting a small flange on the trigger.

When the opening mechanism is released, the rod connecting the latch and the trigger allows the trigger to return to the home position where the mechanism is ready to lock in.

As mentioned above, the latch and the trigger feature geometric shapes along their sides, generally circular, for the home positions of the trigger, i.e. when the trigger is prepared for lock-in, and for the lock-in process, i.e. when the trigger has positioned itself over a given projection in the car bodywork, and engages the projection.

The base plate on which the latch, trigger, and rubber stop rivets are mounted includes another stop to limit the latch movement. The purpose of this additional stop is to prevent any relative movement between the latch and the trigger in the trigger's closed position in the event of excessive strain caused by movements of loads in the boot.

The functions of the latch and trigger springs are as follows:
- The function of the trigger spring is to allow the trigger to rotate to its movement position, where the trigger is able to move from one bodywork lock-in point to another.
- The function of the latch spring is to allow the latch to rotate to the device's position of closure.

In the position in which the back of the seat is engaged with a projection on the car bodywork, the opening control is closed on the upper section of the seat, and the rod connected to this control is located in its highest position. Clockwise movement of the latch is restricted by the stop on the base plate, and the latch-spring rests on the base plate projection.

A rounded section on the side of the latch makes surface contact with a section of the trigger, and the guide rod is fastened to the latch and to the anticlockwise end of the trigger's circular cut-out.

The trigger recess faces downwards to engage the bodywork projection, and the trigger-spring makes contact with the rubber stop connected to the rivet at some distance from the centre of the trigger. The trigger's side projection is also at some distance from the rubber stop, and the trigger itself makes lateral contact with the rubber stop.

In order to disengage this interconnection, the opening procedure is carried out. The connecting rod moves down, forcing the latch to rotate in the anticlockwise direction. Due to this rotating movement, the guide rod connecting the latch and the trigger forces the trigger to rotate in the anticlockwise direction. The trigger recess is now inclined, so when the seat is pushed forward the bodywork projection may be disconnected from the recess.

During rotation of the latch and the trigger, surface contact along their sides is maintained by means of geometric coincidence of a further two areas on these sides in both parts.

In this position, the seat back may be rotated and folded forward.

To move the seat forward from the folded position to any other bodywork projection fastening position, the opening procedure is repeated to a second position, and the connection rod again moves down to make the latch rotate in the anticlockwise direction.

This rotating movement makes the latch lose surface contact with the trigger. The trigger spring therefore turns the trigger recess almost horizontal, and thus in this position the latch completely passes by the various bodywork projections and the back of the seat may be moved to any of these positions.

In this position, the trigger rotation is limited by the contact of a projection in the trigger with the rubber stop in the base plate.

With the trigger in this situation of movement, when the required lock-in position has been selected the lever returned to the home position.

When the release device moves down, its rod makes the latch rotate in the clockwise direction. The rod connection between latch and trigger then forces the trigger clockwise until it is positioned at an incline. The trigger entrance is tapered to easily engage the projection selected to position the seat back.

In this regard we wish to mention that the trigger has a rubber support attached to it, and connects with a rubber stop which prevents vibrations.

Furthermore, the trigger entrance which connects with each fastening projection is provided with a supporting device that includes a rubber stop for the trigger, and that prevents vibrations as it interferes with vehicle fastenings.

All the aforementioned details as well as other details of the invention are shown in much more detail and clarity on the attached drawings, which set out the following:
- Figures 1 to 8 show various sequences of the operation of the mechanism, where the different positions of the mechanism can be observed.
- Figure 9 shows the mechanism in the closed position.
- Figure 10 shows the mechanism in the home position.
- Figure 11 shows the mechanism moving from one lock-in point to another during selection of the exact location of the back of the seat.

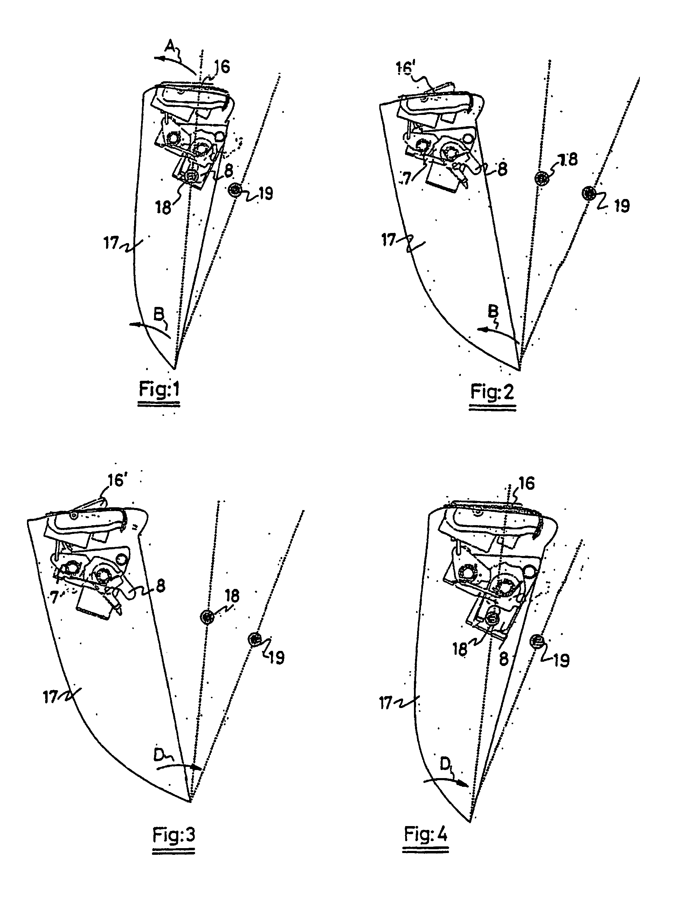

With regard to Figure 1, we should first state that in this position the back of the seat (17) is anchored at one of the bodywork points (18), with the trigger (8) engaging the lock-in point. The passenger area is located at the left of the figure and the car boot is located to the right. In order to change the position of the seat back (17), the opening mechanism (16) is activated in the direction of arrow (A), pulling the seat in the direction of arrow (B).

Thus, the assembly moves to the position shown in Figure 2, where the opening mechanism (pull bar) has moved upward and the trigger (8) has moved from the previous position to that shown in the figure, turned in the anticlockwise direction and with the back of the seat leaned to a forward position.

From this point, the back of the seat can be placed in the fully-folded horizontal position, if desired.

From any of the folded positions selected, the seat back can return to the locked position by pushing it in the direction of arrow (D) in Figure 3, where the trigger (8) for example reaches position (18) as shown in Figure 4, which is extremely similar to the locked position shown in Figure 1.

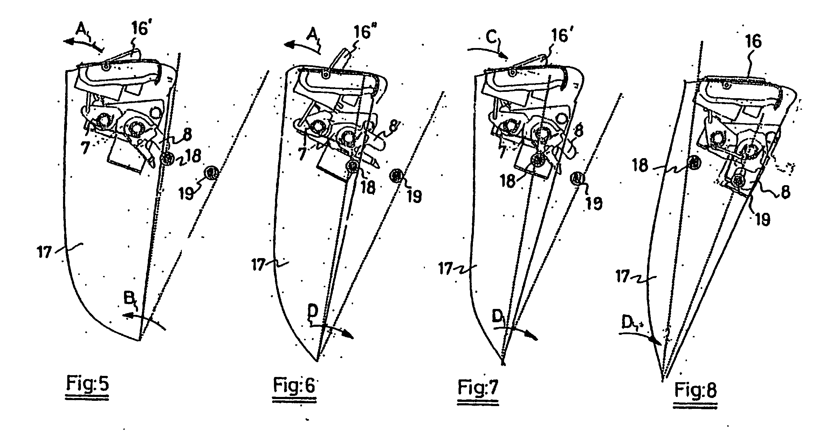

With the back of the seat (17) in the locked position through Figures 4 and 5, moving the control device to position (16') frees the trigger (8) from its projection (18), and the seat back may be folded down.

If the control device (16) is then moved to position (16") in Figure 6, the trigger (8) again rotates in the anticlockwise direction and positions itself to allow the seat back to move, for example, from a lock-in position (18) to another lock-in position (19).

When the approach of the trigger (8) in Figure 7 takes place, the assembly is ready to engage the second bodywork projection (19). Next, when the seat back (17) is pushed in the direction of arrow (D) the situation shown in Figure 8 is reached.

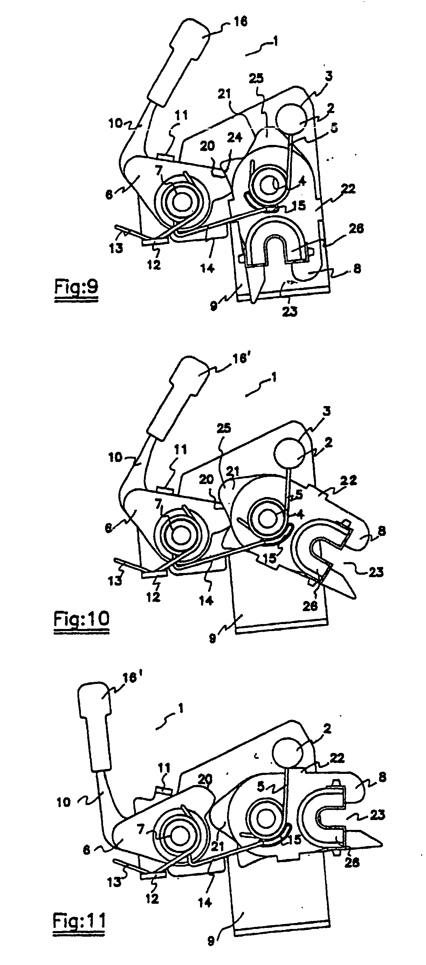

These sequences are determined by the mechanism itself, which is shown more clearly in Figures 9, 10 and 11.

Figure 9 shows the assembly in the closed position, with the latch (6) connected to the activation mechanism (16) by the rod (10). The latch rotates on a central rivet (7) which features a spring (13) that rests on a projection (12) of the base plate (9).

Clockwise movement of the latch is restricted by the stop (11) on the base plate (9), as shown.

The trigger (8) is assembled on the base plate (9) and rotates over the rivet (4), on which a spring (5) unwinds, fixed to the trigger (8) and a rubber stop (2) connected to a rivet (3).

The trigger (8) has a circular cut-out (15) through which the guide rod (14) connected to the latch (6) moves along.

The trigger (8) has external geometry with a position (25) making contact with the rubber stop (2) in this closed position. Also, the surfaces (20, 24) of the latch (6) and the trigger (8) make contact with their corresponding geometries.

The trigger (8) also has a side flange (22), at some distance from the rubber stop (2) in the current position, a recess (23) to engage bodywork projections (18, 19), and a rubber stop (26) on the recess (23) to prevent interference with vehicle fastenings.

To release the assembly from the locked position and to move it to the home position represented in Figure 10, the procedure is as follows:

Lever (16) is activated, and latch (6) rotates to free itself from the trigger (8). The trigger's spring (5) then forces the latch (6) to rotate anticlockwise to the position shown in Figure 10.

These movements break surface contact (20, 24) between latch (6) and trigger (8). The trigger (8) rotates and the latch (6) is then returned to its original position by the spring (13) resting on the projection (12). Again, another surface contact is made between area (20) on the latch (6) and area (21) on the trigger (8).

When the mechanism is activated (16), the guide rod (14) secured to the latch (6) and the trigger cut-out (15) (here, at the cut-out (15)) forces the trigger to move back to the home position, Figure 10, where the assembly is ready to lock in.

From this home position, Figure 10, when the assembly must be secured to lock back the seat, the chosen projection (18, 19) is approached, the seat is then pushed back and the assembly returns to the position shown in Figure 9.

To position the mechanism to allow it to move from one locking position to another, the lever (16) is activated again, with this mechanism in the position shown in Figure 10 and moving towards the position shown in Figure 11.

Here the latch (6) moves in an anticlockwise direction to disengage surface contact (20, 21) with the trigger (8), which also rotates anticlockwise until the projection (22) makes contact with the rubber stop (2) and the back of the seat is able to pass by the locking positions (18, 19) until the desired locking position is reached.

When the seat is in the required position, the lever (16") is again used to return to the position shown in Figure 11. The latch (6) rotates anticlockwise, allowing the trigger (8) to rotate clockwise to the home position shown in Figure 10, ready to lock.

The multi-position rear seat lock preferably locks on to the upper part of the seat, with the opening device integrated in the mechanism, and being this opening device of any type - a lever, a bar, a button, a pull bar, etc. - and connected to a suitable casing and to the activation rod, forming an assembly with all integrated mechanisms.

## Claims

1. Multi-positional rear seat lock, with a mechanism housed in the back of the seat (17) that acts in combination with one or more locking positions (18, 19, etc.) on the car bodywork in order to allow the seat to rest in different positions, with any kind of release device (16) that provides rotation and is connected to a casing and an activation rod (10), said multi-positional rear seat lock comprising a base plate (9), a latch (6) and a trigger (8) and being **characterized in that**:
- the base plate (9) is connected to the casing, where the base plate (9) is provided with three rivets (7, 3, 4) and two stops (11, 12) on one of its sides,
- the latch (6) is a flat part that is connected to and rotates upon the first (7) of said three rivets (7, 3, 4), and that is connected to the activation rod (10), with a spring (13) on the first rivet (7) one of whose (13) free ends is locked into a stop (12) of the base plate (9), where the latch (6) is provided with a position able to make contact with a stop (11) on the base plate (9), a rounded side section (20), and a housing for the end of a guide rod (14) that is directed towards the trigger,
- the trigger (8) is a flat part, coplanar to latch (6), that is connected to and rotates upon the second (4) of said three rivets (7,3,4), where the second rivet (4) is connected to a spring (5), the end of which is connected to the other, third (3) of said three rivets (7,3,4,) on the base plate (9), where the third rivet (3) features a rubber stop (2) to block the rotation of the trigger by blocking two projections (25, 22) of the trigger (8), where the trigger (8) includes two rounded side sections (21, 24) whose geometry engages with that of the side (20) of the latch (6), a side U-recess (23) for the bodywork locking positions (18, 19, etc.) , and a cut-out (15) concentric with the second rivet (4) to which the other end of the guide rod (14) connected to the latch (6) is connected,
- a rubber support device (26) is housed in the recess (23) of the trigger (8),
- the trigger (8) has three different positions, a first locking position, where the recess (23) engages with the car bodywork locking positions (18, 19, etc.), where the projection (25) makes contact with the rubber stop (2) restricting the trigger's clockwise rotation, and where the surfaces (20, 24) of the latch (6) and trigger (8) make surface contact and the latch rests on stop (11) of the base plate (9), a second home position where the trigger recess (23) does not lock on, where there is surface contact (20, 21) between trigger (8) and latch (6), and the latch again rests on the projection (11), and a third position for movement from one locking position to another, where anticlockwise rotation of the trigger (8) is inhibited by contact between its projection (22) and the rubber stop (2), where no surface contact exists between the trigger (8) and the latch (6) or between the latch (6) and the projection (11) on the base plate (9).

2. Multi-positional rear seat lock, according to claim 1, which is **characterized in that** the mechanism's assembly is located on the upper section of the seat (17).

3. Multi-positional rear seat lock, according to claim 1, which is **characterized in that** the mechanism's assembly is integrated with the release device (16).

4. Multi-positional rear seat lock, according to claim 1 to 3, which is **characterized in that** on engagement of the release device (16), the guide rod (14) connecting the latch (6) and the trigger (8) allows the trigger (8) to move back to the home position ready to lock in.

5. Multi-positional rear seat lock, as per claim 1, whereby the release device (16) may be of any type - lever, bar, button or pull bar.

## Patentansprüche

1. Mehrstufige Feststellvorrichtung für den Rücksitz, mit einem Mechanismus, der in der Rücklehne des Sitzes (17) untergebracht ist, welcher in Kombination mit einer oder mehreren Feststell-Positionen (18, 19 usw.) auf die Karosserie des Fahrzeugs wirkt, um zu ermöglichen, dass der Sitz in verschiedenen Positionen einrastet, mit einer Art von Lösevorrichtung (16), die für Rotation sorgt und mit einem Gehäuse und einer Schaltstange (10) verbunden ist, wobei besagte mehrstufige Feststellvorrichtung für den Rücksitz eine Grundplatte (9), eine Klinke (6) und einen Schalter (8) umfasst, und durch Folgendes gekennzeichnet ist:
- Die Grundplatte (9) ist mit dem Gehäuse verbunden, wobei die Grundplatte (9) auf einer ihrer Seiten mit drei Nieten (7, 3, 4) und zwei Anschlägen (11, 12) versehen ist.
- Die Klinke (6) ist ein flaches Teil, das mit dem ersten (7) der besagten drei Niete (7, 3, 4) verbunden ist und um diese herum rotiert, und das mit dem Schaltstange (10) verbunden ist, und zwar mit einer Feder (13) auf dem ersten Niet (7), dessen eines (13) freies Ende in einem Anschlag (12) dieser Grundplatte (9) arretiert wird, wobei die Klinke (6) in eine Stellung gebracht werden kann, die Kontakt mit einem Anschlag (11) auf der Grundplatte (9) verschafft, sowie ein abgerundeter seitlicher Abschnitt (20) und eine Umhüllung für das Ende einer Führungsstange (14), die zu dem Schalter hin ausgerichtet ist,
- Der Schalter (8) ist ein flaches Teil, das sich auf derselben Ebene wie die Klinke (6) befindet, und mit dem zweiten (4) der besagten drei Niete (7, 3, 4) verbunden ist und um dieses herum rotiert, wobei der zweite Niet (4) mit einer Feder (5) verbunden ist, deren Ende mit dem anderen, dritten Niet (3) besagter drei Niete (7, 3, 4) auf der Grundplatte (9) verbunden ist, wobei der Niet (3) einen Gummianschlag (2) aufweist, um die Rotation des Schalters durch die Blockade von zwei Projektionen (25, 22) des Schalters (8) zu blockieren, wobei der Schalter (8) zwei abgerundete seitliche Abschnitte (21, 24) enthält, deren Geometrie mit einer der Seiten (20) der Klinke (6) einrastet, sowie eine seitliche U-förmige Vertiefung (23) für die Feststell-Positionen der Karosserie, und ein mit dem zweiten Niet (4) konzentrischer Ausschalter (15), mit dem das andere Ende der Führungsstange (14), die an die Klinke (6) angeschlossen ist, verbunden ist,
- Eine Stützvorrichtung aus Gummi (26) ist in der Vertiefung (23) des Schalters (8) untergebracht,
- Der Schalter (8) hat drei verschiedene Positionen: eine erste FeststellPosition, bei der der Vertiefung (23) mit den Feststell-Positionen (18, 19 usw.) der Fahrzeugkarosserie einrastet, wobei die Projektion (25) mit dem Gummianschlag (2) Kontakt hat, und so die Rotation des Schalters im Uhrzeigersinn begrenzt, und die Oberflächen (20, 24) von Klinke (6) und Schalter (8) Oberflächenkontakt haben und die Klinke auf dem Anschlag (11) der Grundplatte (9) ruht, eine zweite Ausgangsposition, bei der die Vertiefung (23) des Schalters nicht arretiert, und es Oberflächenkontakt (20, 21) zwischen Schalter (8) und Klinke (6) gibt, und die Klinke (6) erneut auf der Projektion (11) ruht, und eine dritte Position für die Bewegung von einer FeststellPosition zur anderen, bei der die Rotation des Schalters (8) entgegen dem Uhrzeigersinn durch den Kontakt zwischen seiner Projektion (22) und dem Gummianschlag (2) verhindert wird, und kein Oberflächenkontakt zwischen dem Schalter (8) und der Klinke (6) oder zwischen der Klinke (6) und der Projektion (11) der Grundplatte (9) besteht.

2. Mehrstufige Feststellvorrichtung für den Rücksitz, entsprechend Anspruch 1, die **dadurch gekennzeichnet ist, dass** sich die Anordnung des Mechanismus an dem oberen Abschnitt des Sitzes (17) befindet.

3. Mehrstufige Feststellvorrichtung für den Rücksitz, entsprechend Anspruch 1, die **dadurch gekennzeichnet ist, dass** die Anordnung des Mechanismus in die Lösevorrichtung (16) integriert ist.

4. Mehrstufige Feststellvorrichtung für den Rücksitz, entsprechend den Ansprüchen 1 bis 3, die **dadurch gekennzeichnet ist, dass** bei Einrasten der Lösevorrichtung (16) der Führungsstange (14), die mit dem Klinke (6) und dem Schalter (8) verbunden ist, es dem Schalter (8) ermöglicht wird, sich zurück in die Ausgangsposition zu bewegen, fertig zum Einrasten.

5. Mehrstufige Feststellvorrichtung für den Rücksitz, entsprechend Anspruch 1, bei der die Lösevorrichtung (16) von jedem beliebigen Typ sein kann - Hebel, Stange, Knopf oder Zugstange.

## Revendications

1. Système de blocage de siège arrière à plusieurs positions, avec un mécanisme logé à l'arrière du siège (17) qui agit en combinaison avec une ou plusieurs positions de blocage (18, 19, etc.) sur la carcasse de la voiture pour permettre au siège d'être placé sur plusieurs positions, avec une sorte de dispositif de déblocage (16) qui fournit la rotation et est relié à une carcasse et à une tige d'activation (10), ce système de blocage de siège à plusieurs positions comprenant une plaque de base (9), un verrou (6) et une gâchette (8) et qui est **caractérisé par le fait que** :
- la plaque de base (9) est reliée à la carcasse, où la plaque de base (9) est munie de trois rivets (7, 3, 4) et deux butées d'arrêt (11, 12) sur l'un de ses côtés,
- le verrou (6) est une partie plate qui est connectée au premier (7) de ces trois rivets (7, 3, 4) et tourne dessus, et qui est relié à la tige d'activation (10) avec un ressort (13) sur le premier rivet (7), dont l'une des extrémités libres (13) est bloquée dans une butée d'arrêt (12) de la plaque de base (9), où le verrou (6) est muni d'une position lui permettant de faire contact avec une butée d'arrêt (11) sur la plaque de base (9), une section latérale arrondie (20) et une carcasse pour l'extrémité d'une tige de guidage (14) qui est dirigée vers la gâchette.
- la gâchette (8) est une partie plate, coplanaire au verrou (6) qui est reliée à et tourne autour du deuxième (4) des trois rivets (7, 3, 4) où le second rivet (4) est relié à un ressort (5), dont l'extrémité est relié au troisième (3) de ces trois rivets (7, 3, 4), où le troisième rivet (3) comporte une butée d'arrêt en caoutchouc (2) pour bloquer la rotation de la gâchette en bloquant deux projections (25, 22) de la gâchette (8), où la gâchette (8) comprend deux sections latérales arrondies (21, 24), dont la géométrie s'engage avec celle du côté (20) du verrou (6), une encoche latérale en U (23) pour les positions de blocage de la carcasse (18, 19, etc.) et une découpe (15) concentrique avec le deuxième rivet (4) sur laquelle est connectée l'autre extrémité de la tige de guidage (14) reliée au verrou (6),
- un système de support en caoutchouc (26) est logé dans la fente (23) de la gâchette (8),
- la gâchette (8) a trois positions différentes, une première position de blocage, où l'encoche (23) s'engage dans les positions de blocage (18, 19, etc.) de la carcasse de la voiture, où la projection (25) entre en contact avec la butée d'arrêt en caoutchouc (2) réduisant la rotation de la gâchette dans le sens des aiguilles d'une montre et où les surfaces (20, 24) du verrou (6) et de la gâchette (8) entre en contact avec la surface et le verrou repose sur la butée d'arrêt (11) de la plaque de base, une deuxième position de repos où l'encoche de la gâchette (23) ne se bloque pas, où il y a une surface de contact (20, 21) entre la gâchette (8) et le verrou (6) et le verrou repose de nouveau sur la projection (11), et une troisième position pour le mouvement entre une position de blocage et une autre, où la rotation dans le sens inverse des aiguilles d'une montre de la gâchette (8) est empêchée par le contact entre sa projection (22) et la butée d'arrêt en caoutchouc (2), où aucune surface de contact n'existe entre la gâchette (8) et le verrou (6) ou entre le verrou (6) et la projection (11) de la plaque de base (9).

2. Dispositif de blocage arrière à plusieurs positions, conformément à la revendication 1, qui est **caractérisé par le fait que** le montage du mécanisme est situé sur la partie supérieure du siège (17).

3. Dispositif de siège arrière à plusieurs positions, conformément à la revendication 1, qui est **caractérisé par le fait que** le montage du mécanisme est intégré avec le système de déblocage (16).

4. Dispositif de blocage de siège arrière à plusieurs positions, conformément à la revendication 1 à 3, qui est **caractérisé par le fait que** lorsque le dispositif de déblocage est engagé (16), la tige de guidage (14) qui relie le verrou (6) et la gâchette (8) permet à la gâchette (8) de revenir en arrière vrs la position de repos pour bloquer.

5. Dispositif de blocage de siège arrière à plusieurs positions, conformément à la revendication 1, où le dispositif de déblocage 816) peut être de type - levier, barre, bouton ou barre de relevage.
